# EUROPÄISCHE PATENTSCHRIFT

(11) **EP 2 715 735 B1**
(45) Veröffentlichungstag und Bekanntmachung des Hinweises auf die Patenterteilung: **30.03.2016**
(21) Anmeldenummer: 12730166.1
(22) Anmeldetag: 30.05.2012
(51) Int. Cl.: G21D 1/02, G21D 1/04, G21D 3/06, F02B 63/04, G21C 15/18

(54) **VERFAHREN ZUR NOTFALLVERSORGUNG EINER KERNTECHNISCHEN ANLAGE**
METHOD FOR PROVIDING AN EMERGENCY SUPPLY TO A NUCLEAR INSTALLATION
PROCÉDÉ D'ALIMENTATION D'URGENCE D'UNE INSTALLATION NUCLÉAIRE

(30) Priorität: 31.05.2011 DE 102011050744
(43) Veröffentlichungstag der Anmeldung: 09.04.2014
(73) Patentinhaber: 123-Engineering & Innovation GmbH, 63450 Hanau (DE)
(72) Erfinder: MEKISKA, Frank, 63450 Hanau (DE)
(74) Vertreter: Stoffregen, Hans-Herbert
(86) Internationale Anmeldenummer: PCT/EP2012/060116
(87) Internationale Veröffentlichungsnummer: WO 2012/163952

(56) Entgegenhaltungen:
- DE-A1-102007 009 393
- GB-A- 2 434 163
- JP-A- 8 248 167
- US-A- 4 992 669
- US-A1- 2001 032 032

## Beschreibung

Die Erfindung bezieht sich auf ein Verfahren zur Notfallversorgung einer kerntechnischen Anlage unter Benutzung einer von der kerntechnischen Anlage unabhängigen Pumpe und/oder eines Generators.

Kerntechnische Anlagen wie Kernkraftwerke stellen im Falle von Havarien, die z. B. durch Erdbeben, Sabotage, Angriffe oder sonstige Einwirkungen entstehen, ein erhebliches Risiko für die Umwelt dar. Dabei ist bei Störfällen festzustellen, dass weder Werksbetreiber, Katastrophenschutz noch Feuerwehren oder technische Hilfsdienste einen Totalausfall der Kühlsysteme in einem Kernkraftwerk beherrschen, sofern es zu einer mechanischen Zerstörung wie z. B. durch Erdbeben oder Überfluten von Versorgungseinrichtungen wie Pumpengebäuden kommt. Entsprechende Risiken erwachsen auch im Fall von Stromausfällen oder Anlagenfehlbedienungen, wie der Unfall in Tschernobyl gezeigt hat.

Eine Vorrichtung zur Energieversorgung zum Einsatz im Bereich der Bekämpfung von Chemikalienunfällen, bei Schiffshavarien und im Off-Shore-Bereich gemäß der DE 197 39 138 A1 weist ein containerartiges Gehäuse auf, in dem ein Motor, eine Hydraulikpumpe, ein Kraftstofftank sowie ein Generator vorgesehen sind. Dabei sind die Pumpe und der Generator mit dem Motor zu deren Betätigung funktionell verbunden.

Die WO 2010/090634 A1 bezieht sich auf eine modular aufgebaute Energieversorgungsanordnung, an deren Außenwänden Treibstofftanks befestigbar sind.

Gegenstand der US 4 992 669 A ist gleichfalls ein modulares Energiesystem umfassend zwei Container, wobei in einem der Container ein Motor und in dem anderen Container ein Generator angeordnet sind. Motor und Generator werden über eine Welle verbunden, die die Containerwände durchsetzt.

Der US 2008/0217443 A1 ist ein Fahrzeug zu entnehmen, in dessen Kabine eine Pumpe, ein Motor, ein Generator sowie ein Transformator angeordnet sind.

Der US-2001/0032032 A1 ist eine mobile Energieversorgungsanordnung zu entnehmen, die eine containerartige Kabine umfasst, in der ein Antriebsaggregat und ein Generator angeordnet sind. Zusätzlich kann ein Kühlwassertank vorgesehen sein, der über einen Anschlussstutzen von außen befüllbar ist.

Die DE-10 2007 009 393 A1 bezieht sich auf ein mobiles Containermodul für militärische und/oder humanitäre Feldeinsätze bekannt.

Gegenstand der JP-8-248167 A ist ein Notabschaltsystem eines Reaktors.

Der vorliegenden Erfindung liegt die Aufgabe zugrunde, ein Verfahren zur Notfallversorgung einer kerntechnischen Anlage zur Verfügung zu stellen, die sicherstellt, dass im Falle eines Störfalls durch ein von der kerntechnischen Anlage unabhängiges autarkes System ein Betrieb in einem Umfang aufrechterhalten werden kann, dass eine Umweltgefährdung minimiert wird.

Gleichzeitig soll sichergestellt sein, dass der Container in stabiler Lage transportiert und positioniert werden kann.

Zur Lösung der Aufgabe sieht die Erfindung im Wesentlichen die Verwendung eines Versorgungscontainers mit mehreren fest montierten Einrichtungen vor, umfassend zumindest
- Motor,
- Generator,
- Pumpe,
- Treibstofftank,
- Transformator,
- ggfs. einen Dekontaminationsbereich,
wobei die Pumpe in einen Kühlwasserkreislauf der kerntechnischen Anlage integriert wird und/oder
die Pumpe von einer Fremdwasservorlage Kühlwasser in einen Kühlwasserkreislauf oder Abschnitte eines solchen der kerntechnischen Anlage pumpt.

Container mit Stromerzeugungsaggregaten gehören zwar zum Stand der Technik (DE 203 09 849 U), ohne dass es sich hierbei jedoch um ein autarkes System handelt.

Gleiches gilt für den Fall, dass Container als Hauszellen benutzt werden (DE 22 00 851 A1). Erfindungsgemäß wird demgegenüber ein autarkes System zur Verfügung gestellt.

Aufgrund der erfindungsgemäßen Lehre besteht die Möglichkeit, im Falle des Ausfalls des Kühlsystems einer kerntechnischen Anlage - sei es durch Stromausfall, sei es durch zumindest teilweiser Zerstörung des Rohrleitungsnetzes - ersteres wieder zu ertüchtigen oder zu umfahren und somit zu ersetzen.

Die erfindungsgemäße Lehre bietet ein Notversorgungssystem, das unabhängig von der kerntechnischen Anlage ist, so dass durch gezieltes Einsetzen des erfindungsgemäß ausgebildeten Versorgungscontainers innerhalber vorgegebener Karenzzeiten die erforderliche Kühlung wieder herstellbar ist, um Nachzerfallswärme sicher abzuführen. Es wird ein mobiles System zur Verfügung gestellt, das unmittelbar am Einsatzort funktions- und einsatzfähig ist.

Kern des Versorgungscontainers ist ein Motor, insbesondere in Form eines leistungsstarken Abgasturbodieselmotors, der mit einem flüssigen, petrochemischen Treibstoffen oder Pflanzenölen betrieben werden kann.

Der Motor weist zwei Wellenenden auf, an die zum einen eine Pumpe angeschlossen ist, wobei ein Kupplungsgetriebe ein sanftes Anfahren und eine Anpassung der Pumpendreh-zahl gewährleistet. Durch die Pumpe können ausgefallene Pumpen des Kühlsystems der kerntechnischen Anlage ersetzt werden.

An das andere Wellenende ist ein Generator zur Stromerzeugung angeschlossen. Der Strom wird an einen in dem Container integrierten Transformator bzw. eine Transformatorregelstation abgegeben, um auf die benötigten Stromnennwerte transformiert zu werden.

Der erzeugte Strom kann als Ersatz des ausgefallenen Stromnetzes in der kerntechnischen Anlage dienen, um z. B. noch intakte, jedoch ausgefallene Pumpen wieder zu reaktivieren.

Um ein autarkes System zur Verfügung zu stellen, weist der Versorgungscontainer ferner einen fest installierten Tank zur Aufnahme von Treibstoff auf. Dabei sollte das Fassungsvermögen des installierten und gepufferten Tanks wie Stahltanks zumindest 10 m³, insbesondere 15 m³ betragen. Der Tank kann durch Trennbleche in Beruhigungszonen aufgeteilt werden, so dass der Inhalt beim Transport nicht zu aufschaukelnden Bewegungen neigt.

Aufgrund des großen Fassungsvermögens des Tanks kann bei einem Volumen von 15 m³ und einem Verbrauch des Motors von z. B. 135 l/h das System autark 108 h, also 4,5 Tage arbeiten.

In Weiterbildung ist vorgesehen, dass neben dem Versorgungscontainer als ersten Container zusätzlich ein zweiter Container zum Einsatz gelangen kann, der ebenfalls einen Treibstofftank enthalten kann. Der zweite Container kann des Weiteren Einbauten zur Aufnahme von Installationsmaterial oder sonstigen Komponenten enthalten, die zur Aufrechterhaltung der kerntechnischen Anlage benötigt werden.

Bei der Pumpe handelt es sich insbesondere um eine horizontal aufgestellte selbstansaugende Spiralgehäusepumpe, die auf Schmutzwasser ausgelegt ist. Die Pumpe ist über ein Kupplungsgetriebe mit einem der Wellenenden des Motors verbunden und läuft ohne Eigenantrieb. Über die Pumpe kann das Kühlmedium Wasser durch ein anzuschließendes Rohr- bzw. Schlauchsystem zum Bestimmungsort gefördert werden.

Der Generator erzeugt nach dem Dynamoprinzip Strom und gibt diesen sodann an die in dem Container vorhandene Transformatorregelstation und in den erforderlichen Nenngrößen an die Verbraucher ab, bei denen es sich im Wesentlichen um ausgefallene Kühlwasserpumpen handeln dürfte.

Die Einbauten - auch Komponenten genannt - sind an die Leistungsanforderungen von kerntechnischen Anlagen, insbesondere Kernkraftwerken und deren Leistungsbedarf abgestimmt. Das Leistungspotential ist dabei derart gewählt, dass die nachstehenden Anwendungsfälle abgedeckt sind.

An definierten Stellen in vorhandenen Kühlwasserleitungen der kerntechnischen Anlagen werden Anschlussstutzen montiert, die mit abgesperrten und geblockten Handarmaturen verschlossen sein können. An diesen Stellen werden sodann Saug- und Druckleitungen angeschlossen, die mit der Pumpe verbunden sind, um somit die ausgefallenen Kühlwasserpumpe(n) zu ersetzen. Durch die in dem Versorgungscontainer vorhandene Pumpe wird somit das Kühlwasser weiterhin im Kühlwasserkreislauf gefördert. Sind Anschlussstutzen nicht vorhanden, werden z.B. sogenannte "Hot Tapping" vor Inbetriebnahme der Komponenten installiert. Hierbei wird eine unter Druck stehende Leitung angebohrt und in einem Arbeitsgang mit einem Stutzen einschließlich Absperrarmatur versehen. Anschließend kann die im Versorgungscontainer vorhandene Pumpe in Betrieb genommen und der Kühlkreislauf wieder hergestellt werden.

Sofern Teile des vorhandenen Kühlwassersystems physikalisch zerstört sind, kann Wasser saugseitig über vakuumfeste Saugschläuche oder Rohre aus einer Fremdwasservorlage von der Pumpe angesaugt und sodann druckerhöht über Druckschläuche in den Teil des intakten Kühlsystems gepumpt werden. Zuvor müssen zerstörte Leitungsteile abgesperrt und Anschlüsse wie Anbaustutzen gesetzt werden. Bei den Fremdwasservorlagen kann es sich um Meerwasser, Flusswasser, Kühlturmtasse, Teich- oder Seewasser oder um eine vorhandenes Trink- oder Brauchwassernetz handeln.

Es besteht jedoch auch die Möglichkeit bei einem strombedingten Ausfall der Pumpen des Kühlwassersystems der kerntechnischen Anlage, dass diese dadurch in Betrieb genommen werden, dass ein Anschluss an den Generator bzw. Transformator des Containers erfolgt. Weiterhin können Pufferbatterien, die Ventile des Druckregelsystems und des zugehörigen Mess- und Regelsystems steuern, geladen werden.

Als weitere Variante ist anzugeben, dass sowohl die Pumpe betrieben als auch Strom über den Generator erzeugt werden. Hierdurch ergeben sich nachstehende Anwendungsmöglichkeiten:
- Bei Betrieb der Pumpe kann eine Kühlkreislaufüberbrückung oder ein Kühlkreis aufrechterhalten z. B. der Brennelementebeckenkühler erfolgen.
- Bei Betrieb des Generators können ausgefallene Kühlwasserpumpen des vorhandenen Kühlwasserkreislaufs reaktiviert/betätigt werden.
- Bei Betrieb von sowohl Pumpe als auch Generator kann eine Kühlkreislaufüberbrückung und gleichzeitige Inbetriebnahme der ausgefallenen Kühlwasserpumpen erfolgen.

Erfindungsgemäß beinhaltet der Versorgungscontainer als Hauptkomponenten:
- Motor, wie Dieselmotor,
- Stromgenerator,
- Pumpe, wie Hochleistungspumpe einschließlich Grundverrohrung bis Erstabsperrung,
- Treibstofftank,
- Transformatorregelstation, die strahlengeschützt und dekontaminierbar sein sollte.

Ferner sollte der Container zumindest als Anschluss- und Montagematerial enthalten:
- Schweißausrüstung inklusive Schweißbrenner, um Anschlussstutzen an vorhandene Leitungen anzuschweißen,
- diverse Sätze Rohrschlosserwerkzeuge,
- Anschweißfittings und -armaturen,
- ein Hot Tapping-Stutzenanbohrgerät,
- Stutzen- und Absperrarmaturen,
- geeichte Geigerzähler und Dosimeter, Strahlenschutzanzüge, Sauerstoff- und Atemschutzgeräte zum Eigenschutz,
- netzunabhängige und störungsfreie Kommunikationsgeräte.

In Weiterbildung ist vorgesehen, dass dem Versorgungscontainer ein zweiter Container zugeordnet wird, bei dem es sich ebenfalls vorzugsweise um einen 40-FT- oder 45FT-Container handeln kann. Der zweite Container sollte Anschluss- und Montagematerial wie
- Spezialstarkstromkabel,
- Feuerlöschschläuche,
- Kupplungen und Zubehör,
- Schweißausrüstung einschließlich Schweißbrenner,
- Rohrschlosserwerkzeuge,
- Anschlussfittings und -armaturen,
- Hot Tapping-Stutzenanbohrgeräte mit Stutzen und Absperrarmaturen,
- Geigerzähler, Dosimeter, Strahlenschutzanzüge, Sauerstoff- und Atemschutzgeräte,
- Treibstofftank
enthalten, um beispielhaft einige Materialien oder Komponenten zu nennen, die insgesamt zu einer Notversorgung einer kerntechnischen Anlage mittelbar oder unmittelbar zum Einsatz gelangen.

Aufgrund der erfindungsgemäßen Lehre, dass der Treibstofftank im Schwerpunktbereich des Containers, also insbesondere im Mittenbereich installiert ist, ist ein sicheres Positionieren möglich. Bei Überflutung des Geländes können hydraulische, selbstnivellierende Teleskopstützen dazu die Komponenten vor Eindringen des Wassers schützen.

Ein Transport in einem LKW, per Schiff oder Bahn, im Flugzeug oder mittels eines Hubschraubers ist ohne Weiteres möglich.

Die erfindungsgemäße Anordnung ist autark und benötigt für den Fall, dass zur Kühlung der kerntechnischen Anlage dieser das erforderliche Kühlwasser nicht zur Verfügung steht, eine ausreichende Wasservorlage, um die Kühlung sicherzustellen. Dabei ist die Wasserqualität nicht von Bedeutung, da mit einer seewasserfesten Schmutzwasserpumpe zu arbeiten ist. Aufgrund des großen Fassungsvermögens des Treibstofftanks ist ein Dauerbetrieb über einen Zeitraum möglich, der sicherstellt, dass über einen Zeitraum eine Kühlung der kerntechnischen Anlage bzw. eine Stromversorgung möglich ist, die ausreicht, um Reparaturarbeiten durchführen zu können.

Der Container sollte derart ausgelegt sein, dass ein Strahlungs-, Trümmer- und Explosionsschutz gegeben ist. Zusätzlich sollte ein Dekontaminationsbereich mit Dusche integriert sein, um gegebenenfalls kontaminierte Partikel von Personen entfernen zu können.

Aufgrund der Transformatorregelstation kann auf Netzschwankungen reagiert werden, wobei mehrere Stromkreisläufe separat geregelt und die Leistung den Pumpenanforderungen angepasst werden kann. Dabei kann die Transformatorregelstation Ladefunktionen von Pufferbatterien für die Armaturen- und MSR-Instrumentenregelung übernehmen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

Es zeigen:
- Fig. 1: eine Prinzipdarstellung eines Versorgungscontainers,

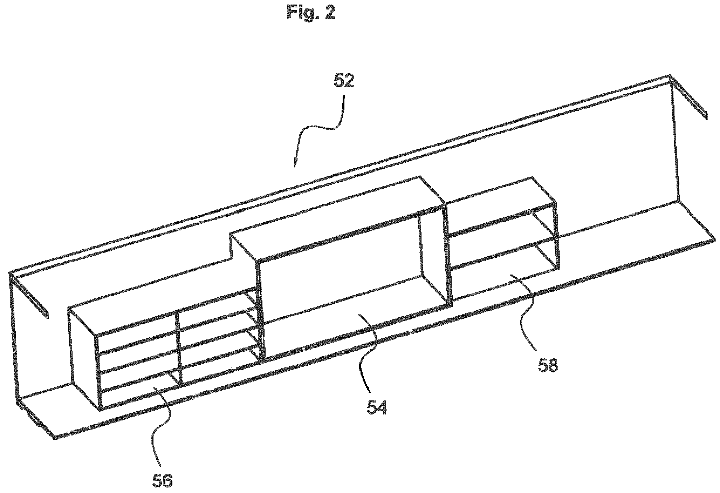

- Fig. 2: eine Prinzipdarstellung eines Zusatzcontainers,
- Fig. 3: eine weitre Prinzipdarstellung des Versorgungscontainers gemäß Fig. 1,
- Fig. 4: eine Prinzipdarstellung eines ersten Einsatzbeispiels eines erfindungsgemäßen Versorgungscontainers,

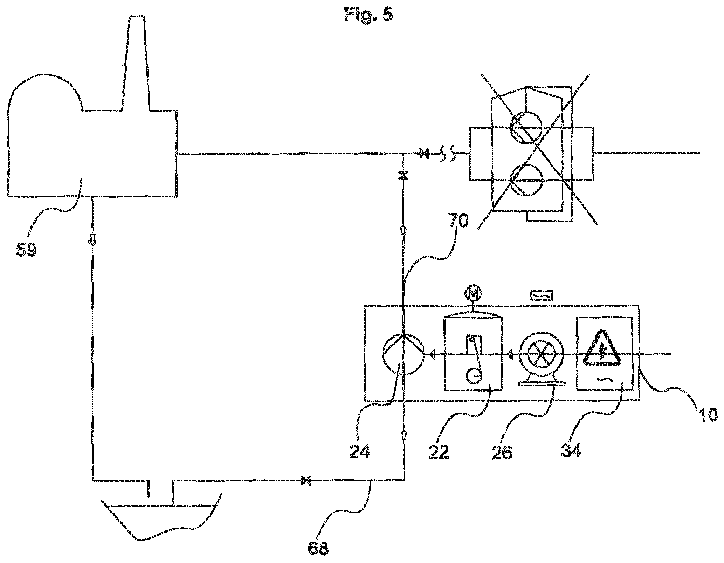

- Fig. 5: eine Prinzipdarstellung eines zweiten Einsatzbeispiels eines erfindungsgemäßen Versorgungscontainers und
- Fig. 6: eine Prinzipdarstellung eines dritten Einsatzbeispiels eines erfindungsgemäßen Versorgungscontainers.

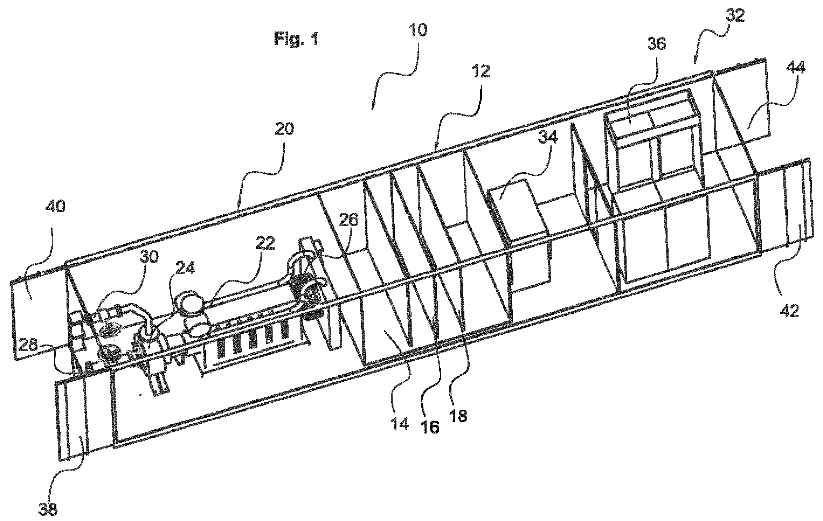

Der Fig. 1 ist rein prinzipiell und in perspektivischer Darstellung ein Versorgungscontainer 10 zu entnehmen, mit dem autark der Betrieb einer kerntechnischen Anlage wie Kernkraftwerk aufrechterhalten werden kann, deren Kühlwassersystem ausgefallen ist, sei es durch Zerstörung des Rohrleitungsnetzes bzw. der Pumpen, sei es durch Stromausfall.

Bei dem Versorgungcontainer 10 - nachstehend kurz Container genannt - handelt es sich insbesondere um einen 40-Fuß-Container, der dem Grunde nach in drei Bereiche unterteilt ist. In einem ersten Bereich 12, der sich im Schwerpunktbereich des fertig gestellten und mit Einbauten versehenen Containers 10 befinden soll, ist ein schusssicherer Treibstofftank 14 eingebaut, der z. B. ein Mindest-Fassungsvermögen von zumindest 10 m³ aufweisen kann, um nur beispielhaft eine Zahl zu nennen. In dem Tank 14 sind Trennbleche 16, 18 vorhanden, um den Tank 14, d. h. dessen Innenvolumen in Beruhigungszonen aufzuteilen. Hierdurch wird sichergestellt, dass beim Transport des Containers 10 eine aufschaukelnde Bewegung des Treibstoffs unterbleibt.

In der zeichnerischen Darstellung der Fig. 1 befindet sich links neben dem Mittenbereich 10 ein zweiter Bereich 20, der als Maschinenraum bezeichnet werden kann, und in dem zumindest ein Motor 22, vorzugsweise in Form eines leistungsstarken AbgasTurbodieselmotors, eine Pumpe 24, insbesondere in Form einer horizontal aufgestellten, selbstansaugenden Spiralgehäusepumpe, die auf Schmutzwasser ausgelegt ist, sowie ein Stromgenerator 26 angeordnet sind. Von der Pumpe 24 gehen ferner absperrbare Saug- und Druckleitungen 28, 30 aus, die sodann in nachstehend beschriebener Art mit einem Kühlsystem der zu versorgenden kerntechnischen Anlage verbindbar sind.

Ein in der zeichnerischen Darstellung rechts von dem Treibstofftank 14 befindlicher dritter Bereich 32 weist einen Transformator 34 sowie ein Strahlenschutzraum 36 mit vorzugsweise einer Dekontaminationsdusche auf.

Der Container 10 ist in seinen Stirnseiten über Schwenktüren 38, 40, 42, 44 verschließbar.

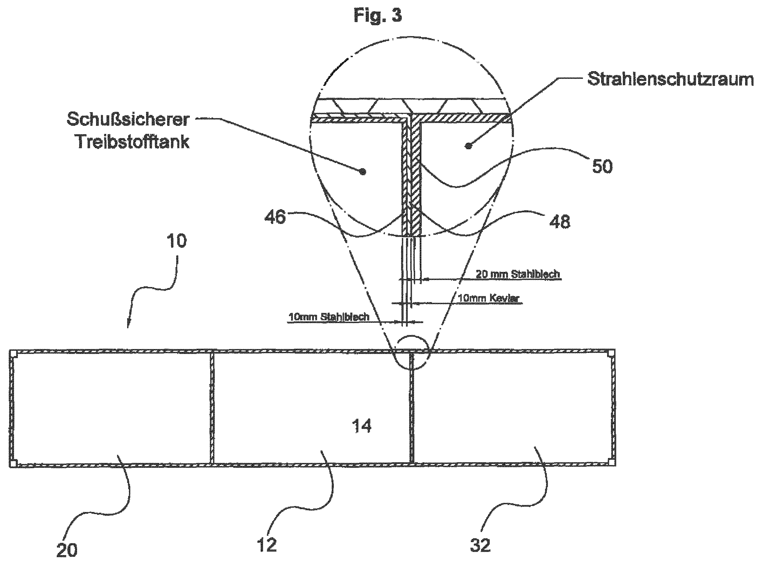

Der Fig. 3 ist eine weitere Prinzipdarstellung des erfindungsgemäßen Containers 10 zu entnehmen, wobei die Bereiche 10, 20 und 32 prinzipiell eingezeichnet sind. Ferner ist ein Detail der vergüteten Stahlblechcontainerwand dargestellt, und zwar zwischen dem schusssicheren Treibstofftank 14 als mittleren Bereich 10 und dem als Strahlenschutzraum bezeichneten rechten Bereich 32, in dem sich zumindest der Transformator 34 befindet.

Aus der Detailzeichnung erkennt man, dass sich die Trennwand zwischen dem Treibstoff-tank 14 und dem Strahlenschutzraum durch ein treibstoffseitiges Stahlblech 46 einer Dicke von z. B. 10 mm, einer Kevlarplatte 48 einer Dicke von z. B. 10 mm und einem Stahlblech 50 einer Dicke von z. B. 20 mm zusammensetzt. Eine entsprechend dicke Stahlblechplatte 50 umgibt auch den dritten Bereich 32, also den Strahlenschutzraum, sowie den Maschinenraum, also den Bereich 20.

Gegebenenfalls ist dem 40-FT-Container 10 beim Einsatz ein zweiter Container 52 beige-stellt, bei dem es sich ebenfalls um einen 40-FT-Container handeln kann, der einen Treibstofftank 54 sowie Regale 56, 58 enthält, um Anschluss- und Montagematerial nachstehend beschriebener Art aufzunehmen.

Aufgrund des großen Fassungsvermögens des Treibstofftanks 14 bzw. 54 steht ein Notversorgungssystem zur Verfügung, das über einen Zeitraum von mehreren Tagen autark arbeiten kann. Beträgt z. B. der Verbrauch des Motors 22 135 l pro Stunde, so kann dieser zumindest 108 Stunden ununterbrochen betrieben werden, sofern das Volumen des Tanks 14 15 m³ beträgt. Steht der Zusatzcontainer 52 gleichfalls mit entsprechendem Volumen des Treibstofftanks 54 zur Verfügung, so ergibt sich insgesamt ein Treibstoffvorrat von ca. 9 Tagen.

Aufgrund der Treibstoffversorgung ist gewährleistet, dass der Motor 22, also bevorzugter-weise das Dieselaggregat, unter Volllast ca. 300 Stunden betrieben werden kann. Volllast bedeutet dabei einen Simultanbetrieb sowohl von der Pumpe 24 als auch von dem Generator 26. Beim Teilbetrieb entweder im Pumpen- oder Generatorbetrieb kann der Motor 22 unter Teillast von 70 % ca. 4.000 Stunden, d. h. in etwa ein halbes Jahr, betrieben werden. Hierdurch ist gewährleistet, dass ein Kühlsystem einer kerntechnischen Anlage in hinreichendem Umfang zum Abführen von Nachzerfallswärme in einem Umfang betrieben wer-den kann, dass eine Umweltgefährdung ausgeschlossen ist.

Zu dem Motor 22 ist anzumerken, dass dieser derart ausgelegt sein sollte, dass ein Betrieb mit allen flüssigen, petrochemischen Treibstoffen oder Pflanzenölen möglich ist.

Der Motor 22 weist zwei Wellenenden auf, von denen eines mit der Pumpe 24 und das andere mit dem Generator 26 verbunden ist. Der Stromgenerator 26 ist mit dem Transformator 34 verbunden, um über eine Regelung in den erforderlichen Nenngrößen Verbraucher versorgen zu können. Auch besteht die Möglichkeit, auf Netzschwankungen zu reagieren und mehrere Stromkreisläufe separat zu regeln und die Leistung an Pumpenanforderungen anzupassen, die sich in der kerntechnischen Anlage befinden.

Die Auslegung der Komponenten des Containers 10 erfolgt an die Leistungsanforderungen einer kerntechnischen Anlage 59 und ist auf deren Leistungsbedarf abgestimmt. Es besteht die Möglichkeit, folgende Anwendungsfälle im Störfall abzudecken.

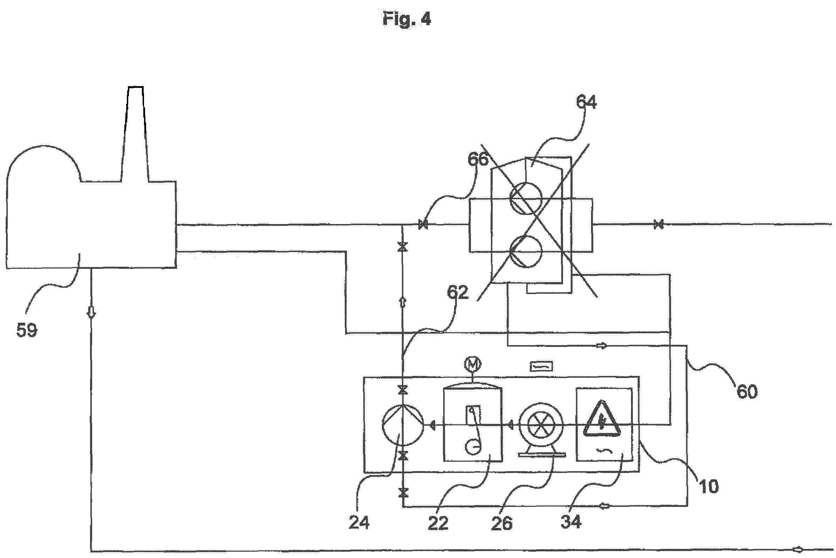

Ist das Kühlsystem der kerntechnischen Anlage 59 ausgefallen, so sind folgende Varianten möglich. So können im Vorfeld an definierten Stellen in den vorhandenen Kühlwasserleitungen Anschlussstutzen montiert werden, die mit einer abgesperrten oder geblockten Handarmatur verschlossen sind. An diesen Stellen werden Saugleitungen 60 und Druckleitungen 62, die mit der Pumpe 24 verbunden sind, angeschlossen, um eine ausgefallene Kühlwasserpumpe 64 zu ersetzen. Der Kühlwasserkreislauf kann weiterhin im Kreis gefahren werden. Entsprechend ist in der zeichnerischen Darstellung der Fig. 4 die Verbindung zwischen der ausgefallenen Pumpe 64 und dem Anschlussstutzen, der mit der Druckleitung 62 verbunden ist, durch eine Absperrarmatur 66 unterbrochen.

Der Fig. 4 ist eine zweite Variante zu entnehmen. Sind Anschlussstutzen nicht vorhanden, so erfolgen entsprechende Hottapping-Rohranbohrungen. Unter Hottapping versteht man das Anbohren von Rohrleitungen unter Druck, wobei in einem Arbeitsgang ein Stutzen einschließlich Absperrarmatur eingebaut wird. Sodann kann die Pumpe des Notfallsystems in Betrieb genommen und der Kühlkreislauf wieder hergestellt werden. Es ergibt sich folglich ein Fließbild, wie dieses der Fig. 4 zu entnehmen ist.

Sofern jedoch Teile des existenten Kühlwasserkreislaufs der kerntechnischen Anlage 59 zerstört sind, wird die Pumpe 24 saugseitig mit einer Fremdwasservorlage verbunden (Leitung 68). Hierbei kann es sich um Meerwasser, Flusswasser, Teich- oder Seewasser oder das vorhandene Trink- bzw. Brauchwassernetz der kerntechnischen Anlage 59 oder einer Kommune handeln. Über die Pumpe 24 wird der angesaugte Wasserdruck erhöht und über Druckschläuche 70 ins intakte Kühlsystem der kerntechnischen Anlage 59 gepumpt. Zuvor wird der zerstörte Leistungsteil abgesperrt und ein Anbohrstutzen für den Anschluss gesetzt.

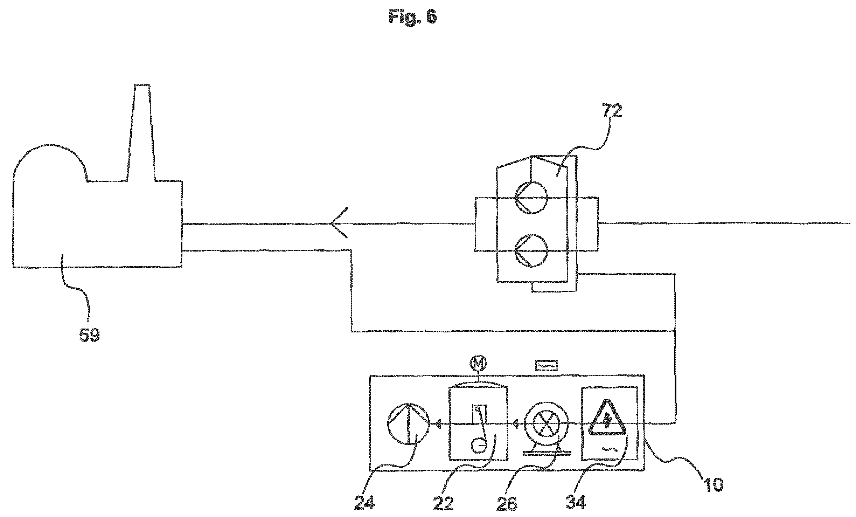

Eine weitere Variante ist der Fig. 6 zu entnehmen. Bei einem strombedingten Ausfall einer noch in Takt befindlichen Pumpe 72 wird diese über den Transformatorregler 36 mit Strom versorgt, ohne dass über die Pumpe 24 des Containers 10 selbst eine Förderung von Kühlwasser erfolgen muss.

Zusammenfassend ist festzuhalten:
1. Der Container 10 sollte als Hauptkomponenten enthalten:
   - Motor 22,
   - Stromgenerator 20,
   - Pumpe 24 mit Grundverrohrung,
   - Treibstofftank 14,
   - strahlengeschützte Transformator- bzw. Regelstation 34 mit gegebenenfalls Dekontaminationsbereich 36 mit Dusche.
2. Als Erst- bzw. Grundausstattung sollten des Weiteren in dem Container 10 zur Verfügung stehen:
   - Schweißausrüstung inklusive Schweißbrenner, um Anschlussstutzen an vorhandene Leitungen anzuschweißen,
   - Rohrschlosserwerkzeuge,
   - Anschlussfittings und Armaturen, insbesondere in einer Nennweite DIN 100,
   - ein "Hot Tapping"-Stutzenanbaugerät mit Stutzen und Absperrarmaturen,
   - geeichte Geigerzähler und Dosimeter,
   - Strahlenschutzanzüge, Sauerstoff- und Atemschutzgeräte,
   - unabhängige und störungsfreie Kommunikationsgeräte.
3. Der zweite Container 52, bei dem es sich ebenfalls um einen 40-Fuß-Container handeln kann, sollte Anschluss- und Montagematerial wie folgt enthalten:
   - Spezial-Starkstromkabel, um ausgefallene Pumpen wieder in Betrieb zu nehmen,
   - robuste Feuerlöschschläuche und Kupplungen sowie Zubehör, um entweder vorhandene Kühlsysteme zu ertüchtigen oder autark Wasser in die kemtechnische Anlage einzubringen (vakuumfeste Saugrohre/-schläuche),
   - Schweißausrüstung inklusive Schweißbrenner, um Anschlussstutzen an vorhandene Leitungen anzuschweißen,
   - Rohrschlosserwerkzeug,
   - Anschweißfittings und Armaturen, insbesondere in einer Nennweite DIN 100,
   - ein "Hot Tapping"-Stutzenanbaugerät mit Stutzen und Absperrarmaturen,
   - geeichte Geigerzähler und Dosimeter,
   - Strahlenschutzanzüge,
   - Sauerstoff- und Atemschutzgeräte zum Eigenschutz,
   - einen Treibstofftank mit einem Fassungsvermögen von zumindest 10 m³, vorzugsweise 15 m³,
   - sonstige Verbrauchsmaterialien.

Das erfindungsgemäße System ist autark und benötigt zur Funktion eine ausreichende Wasservorlage. Dabei ist die Wasserqualität unerheblich, da mit einer seewasserfesten Schmutzwasserpumpe 24 gearbeitet werden soll. Die in dem bzw. den Containern 10, 52 zu lagernde Treibstoffmenge sollte derart dimensioniert sein, dass ein Dauertrieb über viele Tage ohne Nachtanken möglich ist.

Hauptanwendungsfokus ist der ausgefallene Kühlkreislauf auf einer kerntechnischen Anlage, um diesen wieder zu aktivieren, so dass sichergestellt ist, dass Nachzerfallswärme sicher abgeführt werden kann.

Dies wird insbesondere dadurch erreicht, dass der vorhandene Kühlwasserkreislauf ersetzt oder dieser ertüchtigt wird und/oder durch Überbrückung des Stromkreislaufes, um ausgefallene Kühlwasserpumpen wieder in Betrieb zu nehmen.

Der bzw. die Container 10, 52 sollten insbesondere einen Strahlungs-, Trümmer- und Explosionsschutz aufweisen. Es sollte eine Dekontaminationsdusche integriert sein, um kontaminierte Partikel von Personen zu entfernen. Die Transformatorregelstation kann auf Netzschwankungen reagieren und mehrere Stromkreisläufe separat regeln und die Leistung den Pumpenanforderungen anpassen. Ferner kann die Trafo-Regelstation Ladefunktion von Pufferbatterien für die Armaturen- und MSR-Instrumentenregelung übernehmen. Sie ist variabel und auf die benötigten Nenngrößen justierbar.

Der Container 10, 52 ist mobil und somit standortunabhängig, autark, robust und benötigt keine strukturelle Anbindung. Ein konstruktiver, einfacher und kompakter Aufbau stellt sicher, dass eine Störungsunanfälligkeit gegeben und eine grundsätzlich weltweite Einsetzbarkeit erfolgt. Ein Einsatz außerhalb kernkrafttechnischer Anlagen ist gleichfalls möglich, z. B. Einsatz in Katastrophengebieten, in denen Strom, Wasser/Trinkwasser, Abwasserreinigung und Wärme benötigt wird. An die Einsatzaufgaben sind sodann die Komponenten anzupassen bzw. entsprechend ist der Container auszustatten.

## Patentansprüche

1. Verfahren zur Notfallversorgung einer kerntechnischen Anlage unter Benutzung einer von der kerntechnischen Anlage unabhängigen Pumpe (24) und/oder eines Generators (26),
**gekennzeichnet durch**
die Verwendung eines Versorgungscontainers (10) mit mehreren fest montierten Einrichtungen, umfassend zumindest
- Motor (22),
- Generator (26),
- Pumpe (24),
- Treibstofftank (14),
- Transformator (34),
wobei die Pumpe in einem Kühlwasserkreislauf der kerntechnischen Anlage integriert wird und/oder
die Pumpe von einer Fremdwasservorlage Kühlwasser in einen Kühlwasserkreislauf oder Abschnitte eines solchen der kerntechnischen Anlage pumpt.

2. Verfahren nach Anspruch 1,
**dadurch gekennzeichnet,**
**dass** der Transformator mit einer Regeleinrichtung verbunden ist, mit der eine Stromversorgungsquelle wie Batterien in der kerntechnischen Anlage versorgt werden.

3. Verfahren nach Anspruch 1,
**dadurch gekennzeichnet,**
**dass** der Treibstofftank (14) im Schwerpunktbereich des Versorgungscontainers (10) angeordnet wird.

4. Verfahren nach Anspruch 1,
**dadurch gekennzeichnet,**
**dass** als der Motor (22) ein Dieselmotor, insbesondere Abgas-Turbodieselmotor, mit zwei Wellenenden verwendet wird, wobei eines der Wellenenden mit der Pumpe (24) in Form vorzugsweise einer selbstansaugenden auf Schmutzwasser ausgelegten Pumpe, ins-besondere eine Spiralgehäusepumpe, und das andere Wellenende mit dem Generator (34) verbunden wird.

5. Verfahren nach Anspruch 1,
**dadurch gekennzeichnet,**
**dass** der Treibstofftank (14) mit einem Fassungsvermögen von zumindest 10 mm, insbesondere 15 m³, schusssicher ausgelegt und insbesondere durch Trennbleche (16, 18) in Beruhigungszonen aufgeteilt wird.

6. Verfahren nach zumindest einem der vorherigen Ansprüche,
**dadurch gekennzeichnet,**
**dass** alsder Container (10) ein Container mit einem Dekontaminationsbereich (36) mit Dusche verwendet wird.

7. Verfahren nach zumindest einem der vorherigen Ansprüche,
**dadurch gekennzeichnet,**
**dass** als der Container (10) zumindest ein 40-FT-Container mit vergüteten Stahlblechwandungen verwendet wird, dass im Mittenbereich des Containers der Treibstofftank (14) angeordnet wird, dass in Längsrichtung des Containers betrachtet auf einer Seite des Treibstofftanks der Motor (22), der Generator (26) und die Pumpe (24) und auf der anderen Seite des Treibstofftanks der Transformator (34) und der gegebenenfalls vorhandene Dekontaminationsbereich angeordnet werden.

8. Verfahren nach zumindest einem der vorherigen Ansprüche,
**dadurch gekennzeichnet,**
**dass** der Transformator (34) strahlengeschützt in dem Container angeordnet wird.

## Claims

1. A method to provide an emergency supply to a nuclear installation using a pump (24) and/or a generator (26) that is/are independent of the nuclear installation, **characterized by**
the use of a supply container (10) with several permanently installed facilities, comprising at least
- a motor (22),
- a generator (26),
- a pump (24),
- a fuel tank (14),
- a transformer (34),
whereby the pump is integrated into a cooling water cycle of the nuclear installation and/or
the pump is used to pump cooling water from an external water feed into a cooling water cycle or sections thereof of the nuclear installation

2. The method according to claim 1,
**characterized in that**
the transformer is connected to a controller via which a power source, such as batteries, is supplied in the nuclear installation.

3. The method according to claim 1,
**characterized in that**
the fuel tank (14) is situated in the region of the center of gravity of the container (10).

4. The method according to claim 1,
**characterized in that**
the motor (22) is embodied as a Diesel motor, in particular a turbocharged Diesel motor, with two shaft ends, whereby one of the shaft ends is connected to the pump (24), preferably embodied as a self-priming pump designed for waste water, in particular a spiral casing pump, and the other shaft end is connected to the generator (34).

5. The method according to claim 1,
**characterized in that**
the fuel tank (14) with a holding capacity of at least 10 m³, in particular 15 m³, is embodied bullet-proof and in particular is subdivided into relaxation zones by partition plates (16, 18).

6. The method according to at least one of the preceding claims,
**characterized in that**
the container (10) used contains a decontamination area (36) with a shower.

7. The method according to at least one of the preceding claims,
**characterized in that**
the container (10) is at least a 40 ft container with walls of tempered steel plate, that the fuel tank (14) is arranged in the center region of the container, that - viewed along the longitudinal container axis - the motor (22), the generator (26), and the pump (24) are arranged on one side of the fuel tank while the transformer (34) and the possibly present decontamination area are arranged on the other side of the fuel tank.

8. The method according to at least one of the preceding claims,
**characterized in that**
the transformer (34) is arranged in the container in a radiation-protected fashion.

## Revendications

1. Procédé d'alimentation d'urgence d'une installation nucléaire en utilisant une pompe (24) indépendante de l'installation nucléaire et/ou un générateur (26),
**caractérisé par**
la mise en oeuvre d'un conteneur logistique (10) avec plusieurs dispositifs fermement montés, comprenant au moins
- un moteur (22),
- un générateur (26),
- une pompe (24),
- un réservoir de carburant (14),
- un transformateur (34),
sachant que la pompe est intégrée dans un circuit d'eau de refroidissement de l'installation nucléaire et/ou
que la pompe refoule de l'eau de refroidissement depuis un récipient d'eau d'apport dans un circuit d'eau de refroidissement de l'installation nucléaire ou dans des parties dudit circuit.

2. Procédé selon la revendication 1,
**caractérisé en ce**
**que** le transformateur est relié à un dispositif régulateur avec lequel est alimentée une source d'alimentation en courant, telle que des batteries, dans l'installation nucléaire.

3. Procédé selon la revendication 1,
**caractérisé en ce**
**que** le réservoir de carburant (14) est placé dans la zone du centre de gravité du conteneur logistique (10).

4. Procédé selon la revendication 1,
**caractérisé en ce**
**qu'**en tant que moteur (22) est utilisé un moteur diesel, en particulier un moteur diesel à turbocompresseur à gaz d'échappement, avec deux bouts d'arbre, sachant que l'un des bouts d'arbre est relié à la pompe (24), laquelle est de préférence une pompe à amorçage automatique conçue pour de l'eau sale, en particulier une pompe à carter en volute, et que l'autre bout d'arbre est relié au générateur (34).

5. Procédé selon la revendication 1,
**caractérisé en ce**
**que** le réservoir de carburant (14) est conçu à l'épreuve des balles avec une contenance d'au moins 10 m³, en particulier de 15 m³, et est en particulier divisé en zones de stabilisation par des cloisons métalliques (16, 18).

6. Procédé selon au moins une des revendications
précédentes, **caractérisé en ce**
**qu'**en tant que conteneur (10) est utilisé un conteneur avec une zone de décontamination (36) équipé d'une douche.

7. Procédé selon au moins une des revendications
précédentes, **caractérisé en ce**
**qu'**en tant que conteneur (10) est utilisé au moins un conteneur de 40 pieds avec parois en tôles d'acier trempé et revenu, que le réservoir de carburant (14) est placé dans la zone centrale du conteneur, que vus dans le sens longitudinal du conteneur, le moteur (22), le générateur (26) et la pompe (24) sont disposés d'un côté du réservoir de carburant, et que le transformateur (34) et la zone de décontamination, éventuellement présente, sont disposés de l'autre côté du réservoir de carburant.

8. Procédé selon au moins une des revendications
précédentes, **caractérisé en ce**
**que** le transformateur (34) est placé à l'abri des radiations dans le conteneur.
